# EUROPÄISCHE PATENTSCHRIFT

(11) **EP 3 736 499 B1**
(45) Veröffentlichungstag und Bekanntmachung des Hinweises auf die Patenterteilung: **31.05.2023**
(21) Anmeldenummer: 19173002.7
(22) Anmeldetag: 07.05.2019
(51) Int. Cl.: F24C 7/08, G06F 3/0486, G06F 3/0488, G06F 3/0354

(54) **GARGERÄT MIT EINER BERÜHRUNGSEMPFINDLICHEN BEDIENANZEIGE MIT BEDIENERLEICHTERUNG**
COOKING APPLIANCE WITH A TOUCH-SENSITIVE OPERATING DISPLAY WITH EASE OF USE
APPAREIL DE CUISSON AVEC UN ÉCRAN DE COMMANDE TACTILE AVEC FACILITÉ D'UTILISATION

(43) Veröffentlichungstag der Anmeldung: 11.11.2020
(73) Patentinhaber: V-Zug AG, 6300 Zug (CH)
(72) Erfinder: Perlinger, Kevin, 8052 Zürich (CH); Borger, Julia, 8038 Zürich (CH); Schenkel, Thomas, 8317 Tagelswangen (CH)
(74) Vertreter: Hochreutener, Joel Marc

(56) Entgegenhaltungen:
- EP-A1- 1 830 248
- EP-A1- 2 211 117
- EP-A1- 3 064 119
- WO-A1-2012/144138

## Beschreibung

### Gebiet der Erfindung

Die Erfindung betrifft ein Haushaltsgerät mit einer berührungsempfindlichen Bedienanzeige und ein Verfahren zum Betreiben einer berührungsempfindlichen Bedienanzeige eines Haushaltsgeräts.

Auf der Bedienanzeige ist mindestens ein Symbol anzeigbar und die Bedienanzeige ist derart ausgestaltet, dass das mindestens eine Symbol durch eine Berührbewegung von einer ersten Anzeigeposition zu einer zweiten Anzeigeposition, welche zur ersten Anzeigeposition beabstandet ist, entlang eines Berührpfades bewegbar ist.

### Hintergrund

Der Einsatz von berührungsempfindlichen Bedienanzeigen auf Haushaltsgeräten, beispielsweise auf Gargeräten, Kochfelder, Kühlschränken etc. ist bekannt. Der Vorteil von berührungsempfindlichen Anzeigen besteht darin, dass die auf der Bedienanzeige durch Berührung aktivierbaren Funktionen auf dem hinter der berührbaren Oberfläche angeordneten Display dynamisch angezeigt werden, und damit die Menüführung an eine gewünschte Situation anpassbar ist.

Bekannt ist auch, dass der Benutzer die Anordnung der Symbole in den einzelnen Menüs verändern und damit benutzerdefiniert ausgestalten kann. Die Vornahme benutzerdefinierte Einstellungen kann aber Probleme bereiten.

EP 2 211 117 zeigt ein Verfahren zum Anordnen von Programm-Icons für Gargeräte auf einer berührungsempfindlichen Anzeige. Virtuelle Bons können auf der Berührungsempfindlichen Anzeige mittels Drag and Drop verschoben werden.

EP 1 830 248 beschreibt einen berührungsempfindlichen Bildschirm, auf welchem ein Benutzer Objekte bewegen kann. Ein unabsichtlicher Kontaktverlust bei der Bildschirmberührung wird ignoriert. Weiterer Stand der Technik ist den Dokumenten WO 2012/144138 A1 und EP 3 064 119 A1 zu entnehmen.

### Darstellung der Erfindung

Es stellt sich die Aufgabe, ein Haushaltsgerät mit einer Bedienanzeige bereitzustellen, bei welchem benutzerdefinierte Anpassungen der Bedienanzeige vereinfacht durchgeführt werden können.

Diese Aufgabe wird durch die Gegenstände der unabhängigen Ansprüche gelöst.

Demgemäss umfasst das Haushaltsgerät eine berührungsempfindliche Bedienanzeige, auf welcher mindestens ein Symbol anzeigbar ist. Die Bedienanzeige ist dabei derart ausgestaltet, dass das mindestens eine Symbol durch eine Berührbewegung von einer ersten Anzeigeposition zu einer zweiten Anzeigeposition, welche zur ersten Anzeigeposition beabstandet ist, entlang eines Berührpfades bewegbar ist. Falls während der Berührbewegung ein Verlust des Berührkontaktes auf einer Zwischenposition auf dem Berührpfad detektiert wird, bleibt das mindestens eine Symbol zunächst angezeigt.

Wenn innerhalb einer bestimmten Zeit nach dem Verlust des Berührkontaktes der Berührkontakt an demjenigen Ort, an welchem das Symbol angezeigt bleibt, insbesondere auf dem Berührpfad, insbesondere auf der Zwischenposition, insbesondere auf dem prognostizierten Berührpfad, erneut entsteht, ist das mindestens eine Symbol auf dem Berührpfad ausgehend von demjenigen Ort, an welchem das Symbol angezeigt bleibt, weiter bewegbar, oder wenn innerhalb der bestimmten Zeit nach dem Verlust des Berührkontaktes der Berührkontakt an demjenigen Ort, an welchem das Symbol angezeigt bleibt, insbesondere auf dem Berührpfad, insbesondere auf der Zwischenposition, insbesondere auf dem prognostizierten Berührpfad, nicht erneut entsteht, erlischt das Symbol oder springt auf die erste Anzeigeposition zurück.

Beim Berührpfad handelt es sich um einen beliebigen Pfad auf der Bedienanzeige, welcher der Benutzer durch seine Berührbewegung vorgibt.

Für die erneute Berührung zur Wiederaufnahme der Bewegung muss nicht präzise derjenige Ort, an welchem das mindestens eine Symbol angezeigt wird, wiederberührt werden. Die Berührung kann innerhalb eines Toleranzbereiches erfolgen, welcher sich beispielsweise bis 0.25 cm, oder 0.5 cm, oder 0.75 cm um den Ort der Anzeige des mindestens einen Symbols erstreckt.

Die anspruchsgemässe Ausgestaltung der Bedienanzeige hat den Vorteil, dass ein unabsichtlicher Verlust des Berührkontaktes durch den Benutzer zu keinerlei Schwierigkeiten bei der Benutzung der Bedienanzeige führt und die gesamte Berührbewegung nicht von vorne erneut gestartet werden muss.

Insbesondere kann die bestimmte Zeit grösser 0.25 Sekunden, insbesondere grösser 0.5 Sekunden, insbesondere grösser 1 Sekunde, insbesondere grösser 2 Sekunden sein, und/oder maximal 4 Sekunden, insbesondere maximal 3 Sekunden, insbesondere maximal 2 Sekunden, insbesondere maximal 1 Sekunde sein.

Die Bestimmung einer geeigneten Wartezeit, bis das Symbol erlischt oder zur ersten Anzeigeposition zurückspringt, erfolgt in Abhängigkeit der Fähigkeiten des Benutzers. Sie soll so eingestellt werden, dass der Benutzer den Verlust der Berührung wahrnimmt und so schnell reagieren kann, dass er die Berührbewegung fortsetzen kann.

Die Bedienanzeige weist mindestens eine Unebenheit auf, insbesondere eine Vertiefung und/oder eine Erhebung. Das mindestens eine Symbol ist entlang des Berührpfades über die Unebenheit bewegbar. Insbesondere beim Bewegen eines Symbols über eine Unebenheit ist das Risiko gross, dass der Berührkontakt verloren geht.

Mit Vorteil ist die Unebenheit über einem Bedienelement der Bedienanzeige angeordnet. Die Unebenheit kann
- eine Vertiefung mit einer Tiefe (T) von mindestens 0.4 mm, insbesondere von mindestens 0.6 mm sein, und/oder
- eine Breite (B) von mindestens 5 mm und/oder höchstens 20 mm aufweisen, und/oder
- eine höhere Oberflächenrauheit als eine die Unebenheit umgebende Oberfläche der Bedienanzeige aufweisen, und/oder
- eine Furche bilden, und/oder
- ringförmig oder gerade sein.

Das mindestens eine Symbol bleibt beim Verlust des Berührkontaktes auf einer Zwischenposition auf dem Berührpfad, insbesondere auf der Zwischenposition, zunächst nur dann angezeigt, wenn die Zwischenposition nicht um mehr als eine bestimmte Distanz, insbesondere 5 cm, insbesondere 3 cm, insbesondere 1 cm, insbesondere 0.5 cm, von der Unebenheit beabstandet ist.

Dieses Kriterium führt zu einer weiteren Optimierung der Steuerung, weil davon ausgegangen wird, dass der Benutzer ohne eine Unebenheit den Berührkontakt nicht verliert.

Mit Vorteil kann die Bedienanzeige derart ausgestaltet sein, dass sich bei Verlust des Berührkontaktes während der Berührbewegung das mindestens eine Symbol ausgehend von der Zwischenposition entlang einer prognostizierten Trajektorie weiterbewegt, oder an der Zwischenposition stehen bleibt.

Die Weiterbewegung auf der Trajektorie hat den Vorteil, dass das mindestens eine Symbol möglichst dort angezeigt wird, wohin sich das Berührelement des Benutzers, insbesondere sein Finger, berührungslos weiterbewegt hat. Die Wiederberührung der Bedienanzeige an demjenigen Ort, an welchem das mindestens eine Symbol angezeigt wird, kann dadurch schneller und einfacher erfolgen.

Insbesondere kann das mindestens eine Symbol ein Garprogramm oder eine Garfunktion verkörpern. Damit können Garprogramme oder Garfunktionen bei einem Gargerät benutzerspezifisch angeordnet werden.

In einer besonderen Ausführungsform ist die Bewegung des mindestens einen Symbols eine Kopierbewegung, wobei die Bedienanzeige derart ausgestaltet ist, dass nach der Bewegung des mindestens einen Symbols zur zweiten Anzeigeposition das mindestens eine Symbol sowohl an der ersten Anzeigeposition als auch an der zweiten Anzeigeposition angezeigt wird.

Mit Vorteil ist eine Zuordnung des mindestens einen Symbols zur ersten Anzeigeposition maschinenseitig bestimmt und eine Zuordnung des mindestens einen Symbols zur zweiten Anzeigeposition ist mittels der Berührbewegung vom Benutzer bestimmbar.

Insbesondere ist die Unebenheit auf einer Geradenverbindung zwischen der ersten Anzeigeposition und der zweiten Anzeigeposition angeordnet und die erste Anzeigeposition und die zweite Anzeigeposition kann auf gegenüberliegenden Seiten der Unebenheit angeordnet sein.

Mit Vorteil ist das Haushaltsgerät ein Gargerät.

Geschützt ist auch ein Verfahren zum Betreiben eines Haushaltsgeräts mit einer berührungsempfindlichen Bedienanzeige, wobei die Bedienanzeige mindestens eine Unebenheit aufweist.

Das Verfahren umfasst die folgenden Schritte:
- Detektion einer Berührung auf der Bedienanzeige an einer ersten Anzeigeposition, an welcher mindestens ein Symbol angezeigt wird,
- Detektion einer Berührbewegung ausgehend von der ersten Anzeigeposition entlang eines Berührpfades und Mitbewegen des mindestens einen Symbols mit der Berührbewegung entlang des Berührpfades,
- Detektion des Verlustes der Berührung auf der Bedienanzeige während der Berührbewegung an einer Zwischenposition,
- fortgesetztes Anzeigen des mindestens einen Symbols auf der Bedienanzeige,
- Prüfung, ob die Berührung der Bedienanzeige an demjenigen Ort, an welchem das mindestens eine Symbol angezeigt bleibt, innerhalb einer bestimmten Zeit erneut erfolgt,
- Entscheidfindung, dass
   1) wenn die Berührung der Bedienanzeige an demjenigen Ort, an welchem das mindestens eine Symbol angezeigt bleibt, innerhalb der bestimmten Zeit erneut detektiert wird, das mindestens eine Symbol mit der fortgesetzten Berührbewegung entlang des Berührpfades weiter mitbewegt wird, und, dass
   2) wenn innerhalb der bestimmten Zeit keine erneute Berührung der Bedienanzeige an demjenigen Ort, an welchem das mindestens eine Symbol angezeigt bleibt, erfolgt, das mindestens eine Symbol erlischt oder auf die erste Anzeigeposition zurückspringt, wobei das mindestens eine Symbol entlang des Berührpfades über die Unebenheit bewegbar ist, und wobei beim Verlust des Berührkontaktes auf einer Zwischenposition auf dem Berührpfad das mindestens eine Symbol zunächst nur dann angezeigt bleibt, wenn die Zwischenposition nicht um mehr als eine bestimmte Distanz von der Unebenheit beabstandet ist.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 ein Gargerät mit einer Bedienanzeige,
Fig. 2 eine schematische Darstellung von Steuereinheit und Bedienanzeige,
Fig. 3 eine Bedienanzeige mit Symbolen vor einer benutzerdefinierten Anpassung,
Fig. 3a einen Schnitt entlang der Linie II-II von Fig. 2,
Fig. 4 eine Bedienanzeige mit einem Berührpfad eines Symbols, und
Fig. 5 eine Bedienanzeige mit Symbolen nach einer benutzerdefinierten Anpassung.

### Weg zur Ausführung der Erfindung

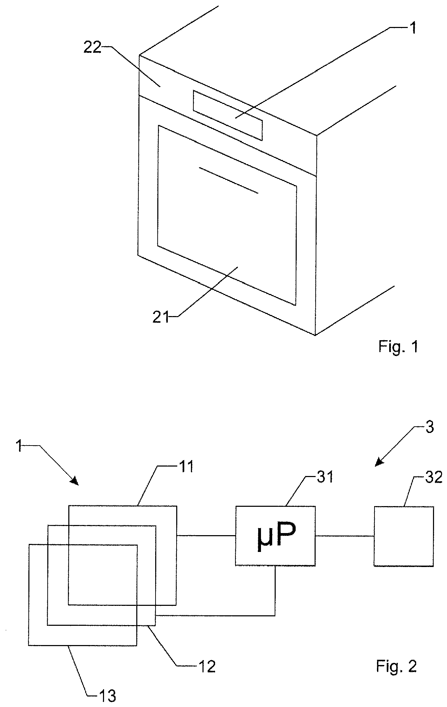

Fig. 1 zeigt ein Gerät mit einer Bedienanzeige 1. In der vorliegenden Ausführungsform ist das Gerät ein Gargerät zum Einbau in einer Küche. Das Gargerät umfasst einen Garraum, welcher mit einer an der Frontseite angeordneten Tür 21 geöffnet und geschlossen werden kann. Das Gargerät kann beispielsweise ein Backofen, ein Dampfgargerät, eine Mikrowelle oder ein Gargerät mit mehreren der genannten Garfunktionen sein. An der Frontseite ist oberhalb der Tür 21 eine Blende 22 angeordnet. In der Mitte der Blende 22 befindet sich die Bedienanzeige 1. Die Bedienanzeige 1 ist eine berührungsempfindliche Bedienanzeige, d.h. der Benutzer kann durch Berührungen der Bedienanzeige 1 das Gargerät steuern. Hierfür weist die Bedienanzeige 1 eine Berührungssensorik 12 auf, welche in Fig. 2 dargestellt ist.

Die Fig. 2 zeigt weiter eine Steuereinheit 3, mit einem Mikroprozessor oder Mikrocontroller 31, welcher mit einem Speicher 32 verbunden ist. Im Speicher sind Informationen zur Menüführung auf der Bedienanzeige abgespeichert. Die Informationen zur Menüführung können fabrikseitig, oder vom Benutzer individuell gespeichert sein.

Die Steuereinheit 3 ist mit der Bedienanzeige 1 verbunden, welche ein Display 11, die Berührungssensorik 12 und eine transparente Abdeckplatte 13 aufweist.

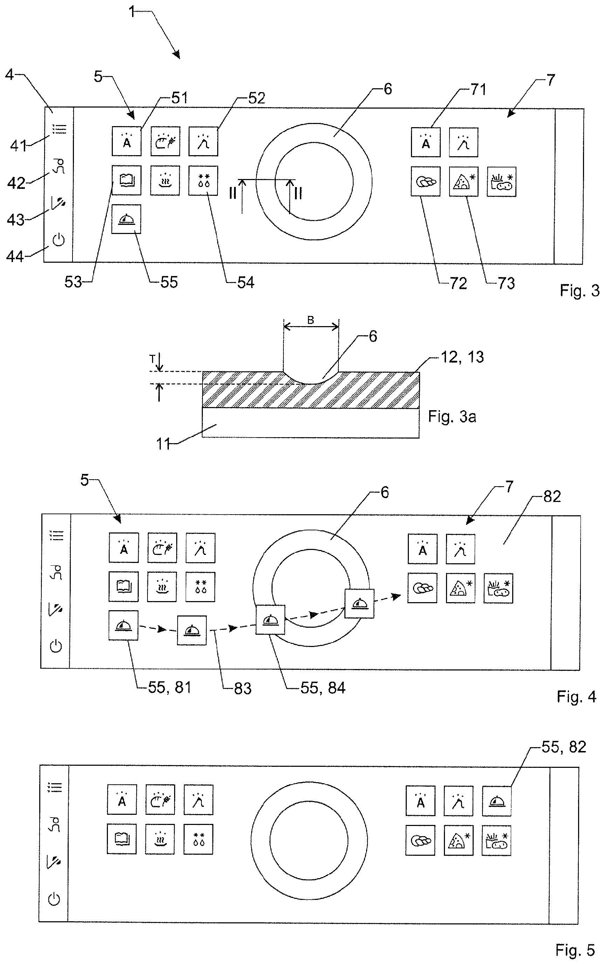

Die Fig. 3 zeigt die Bedienanzeige 1 im eingeschalteten Zustand. Die Bedienanzeige 1 zeigt am linken Rand ein Steuerungsmenü 4 mit vier Symbolen 41-44. Die Anzeige und Anordnung dieser Symbole ist dynamisch und verändert sich abhängig vom gewählten Menü bzw. Untermenü. Beispielsweise öffnet eine Berührung eines ersten Symbols 41 Untermenüs, eine Berührung eines zweiten Symbols 42 erlaubt das Öffnen unterschiedlicher Benutzerprofile und eine Berührung des vierten Symbols 44 schaltet das Gerät ab.

Rechts vom Steuermenü 4 zeigt die Bedienanzeige 1 ein Menü 5 an. Als Menü 5 wird in der Fig. 2 ein GourmetGuide angezeigt. Dieser umfasst mehrere Programme, die das Zubereiten von Speisen so einfach wie möglich machen. Die Programme werden von einfachen Symbolen verkörpert. Der Gourmetguide umfasst beispielsweise eine Garautomatik 51, welche Grösse und Form eines Garguts automatisch erkennen kann, ein Zartgaren 52, welches hochwertige Fleischstücke auf schonende Art zubereitet, ein Rezeptbuch 53, ein Auftauprogramm 54 oder ein Warmhalteprogramm 55. Die Berührung eines Symbols kann ein Garprogramm aktivieren, beispielsweise das Zartgaren 52, oder ein Untermenü aufrufen, beispielsweise das Rezeptbuch 53.

Rechts vom Menü 5 und in der Mitte der Bedienanzeige 1 ist eine ringförmige Vertiefung 6 angeordnet, welche als Furche ausgebildet ist. Der Querschnitt der Vertiefung 6 ist in der Fig. 3a dargestellt. Die Vertiefung weist einen gegenüber der umgebenden Oberfläche zurückversetzten Bereich auf. Die Bedienanzeige 1 umfasst dabei ein Display 11, eine Berührungssensorik 12 und eine transparente Deckplatte 13, in welche die Vertiefung 6 eingefräst ist. Das Display 11 ist in der Lage, unterhalb der Vertiefung 6 Symbole oder andere Bedienelemente darzustellen.

Die Dimensionen der Vertiefung 6 sind mit Vorteil so gewählt, dass sie einen Finger des Benutzers gut führen können.

Vorzugsweise beträgt deshalb die Tiefe T der Vertiefung mindestens 0.4 mm, insbesondere mindestens 0.6 mm, um gut fühlbar zu sein und eine gewisse Führung zu vermitteln.

Die kleinste Breite B, d.h. die Breite senkrecht zur Furchenrichtung, beträgt vorteilhaft mindestens 5 mm und/oder höchstens 20 mm, so dass ein Finger seitlich gut geführt wird.

Die Furche kann Teil eines Eingabemittels für eine vielwertige Eingabegrösse bilden, wobei die Eingabegrösse mittels Verschieben oder Positionieren eines Fingers in der Furche änderbar ist.

Ein Beispiel für eine solche vielwertige Eingabegrösse ist die Vorgabezeit für einen Timer. Ein anderes Beispiel für eine vielwertige Eingabegrösse ist die Solltemperatur des Gargeräts. Ein weiteres Beispiel für eine vielwertige Eingabegrösse ist der Index eines Menu-Eintrags aus einer Auswahl von mindestens drei möglichen Menu-Einträgen, zwischen denen der Benutzer in einer Menu-gesteuerten Eingabe auswählen kann.

Die Eingabegrösse kann der Benutzer in einer Ausführung des Geräts auswählen, indem er den Finger der Vertiefung entlang führt. Wenn er den Finger z.B. in Uhrzeigersinn der ringförmigen Vertiefung 6 entlang führt, kann er den aktuellen Wert der Grösse erhöhen, und durch eine Bewegung im Gegenuhrzeigersinn entlang der ringförmigen Vertiefung 6 kann er den aktuellen Wert der Grösse reduzieren.

Rechts von der Vertiefung 6 zeigt die Bedienanzeige einen benutzerdefinierten Bereich 7 mit mehreren Symbolen 71-73. In diesem benutzerdefinierten Bereich kann der Benutzer wahlweise Symbole anordnen. Vorteilhafterweise ordnet der Benutzer im benutzerdefinierten Bereich 7 Symbole an, welche von ihm häufig benutzte Garprogramme oder Garfunktionen verkörpern. Vorliegend hat der Benutzer beispielsweise die Garautomatik 71 angeordnet, welche im Menü 5 ebenfalls sichtbar ist. Der Benutzer kann allerdings auch Symbole aus unterschiedlichen Menüs oder Untermenüs anordnen. So hat der Benutzer im vorliegenden Beispiel auch ein Garprogramm für einen Zopf 72 und ein Garprogramm für eine Tiefkühlpizza 73 im benutzerdefinierten Bereich 7 angeordnet.

In der Fig. 4 wird dargestellt, wie der Benutzer ein Symbol im benutzerdefinierten Bereich anordnen kann, d.h. vom Menü 5 in den benutzerdefinierten Bereich 7 bewegen, insbesondere kopieren, kann. Vorliegend möchte der Benutzer das Symbol 55, welches ein Warmhalteprogramm verkörpert, aus dem Menü 5 in den benutzerdefinierten Bereich 7 bewegen.

Der Benutzer berührt beim Symbol 55, welches in einer ersten Anzeigeposition 81 im Menü 5 angeordnet ist, die Bedienanzeige 1 und führt eine Berührbewegung entlang des Berührpfades 83 zur zweiten Anzeigeposition 82 durch. Ist der Benutzer mit seiner Berührbewegung an der zweiten Anzeigeposition 82 angekommen, hebt er den Berührkontakt auf, und das Symbol 55 verbleibt an der zweiten Anzeigeposition 82 im benutzerdefinierten Bereich 7. Die Bedienanzeige nach der benutzerdefinierten Anordnung des Symbols 55 im benutzerdefinierten Bereich 7 ist in Fig. 5 dargestellt.

Während der Berührbewegung gleitet der Benutzer mit seinem Finger über die Vertiefung 6 der Bedienanzeige 1. Aufgrund der Unebenheit der Bedienanzeige 1, welche die Vertiefung 6 mit sich bringt, ist es möglich, dass der Benutzer den Berührkontakt zur Oberfläche der Bedienanzeige 1 ohne Absicht verliert. Dies könnte beispielsweise an der Zwischenposition 84 geschehen.

Da in einem solchen Fall der Berührkontakt unabsichtlich aufgehoben wurde, wäre es ungeeignet, wenn der Bewegungsvorgang des Symbols 55 abgebrochen würde. Deshalb ist die Bedienanzeige derart ausgestaltet, dass das bewegte Symbol 55 auf dem Berührpfad zunächst angezeigt bleibt und nicht sofort von der Bedienanzeige 1 verschwindet. Das Symbol 55 kann entweder an der Zwischenposition 84 stehen bleiben, oder es kann sich auf einer prognostizierten, insbesondere extrapolierten, Trajektorie leicht weiterbewegen.

Berührt der Benutzer die Bedienanzeige 1 innerhalb einer bestimmten Zeit, beispielsweise innerhalb von zwei Sekunden, an derjenigen Position auf dem Berührpfad, an welcher das Symbol 55 angezeigt wird, erneut, kann er die Berührbewegung fortsetzen und das Symbol zur zweiten Anzeigeposition 82 entlang des Berührpfades 83 weiterführen.

Berührt der Benutzer die Bedienanzeige innerhalb der bestimmten Zeit an der besagten Position nicht, so verschwindet das Symbol 55 auf dem Berührpfad von der Bedienanzeige 1. Das Symbol 55 ist danach nur im Menü 5 sichtbar.

Die Berührung muss nicht präzise an besagter Position erfolgen. Die Berührung in der Nähe der Zwischenposition 84 ist ausreichend, um die Berührbewegung entlang des Berührpfades 83 fortzusetzen.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Haushaltsgerät mit einer berührungsempfindlichen Bedienanzeige (1), auf welcher mindestens ein Symbol (55) anzeigbar ist, und wobei die Bedienanzeige (1) mindestens eine Unebenheit (6) aufweist,
wobei die Bedienanzeige (1) derart ausgestaltet ist, dass
- das mindestens eine Symbol (55) durch eine Berührbewegung von einer ersten Anzeigeposition (81) zu einer zweiten Anzeigeposition (82), welche zur ersten Anzeigeposition (81) beabstandet ist, entlang eines Berührpfades (83) bewegbar ist, und das mindestens eine Symbol (55) entlang des Berührpfades über die Unebenheit (6) bewegbar ist,
- dass falls während der Berührbewegung ein Verlust des Berührkontaktes auf einer Zwischenposition (84) auf dem Berührpfad (83) detektiert wird, das mindestens eine Symbol zunächst angezeigt bleibt, und
- falls innerhalb einer bestimmten Zeit nach dem Verlust des Berührkontaktes der Berührkontakt an demjenigen Ort, an welchem das Symbol angezeigt bleibt, erneut entsteht, das mindestens eine Symbol (55) auf dem Berührpfad ausgehend von demjenigen Ort, an welchem das Symbol angezeigt bleibt, weiter bewegbar ist, oder falls innerhalb der bestimmten Zeit nach dem Verlust des Berührkontaktes der Berührkontakt an demjenigen Ort, an welchem das Symbol angezeigt bleibt, nicht erneut entsteht, das Symbol (55) erlischt oder auf die erste Anzeigeposition (81) zurückspringt,
**dadurch gekennzeichnet, dass** die Bedienanzeige (1) derart ausgestaltet ist, dass beim Verlust des Berührkontaktes auf der Zwischenposition (84) auf dem Berührpfad (83) das mindestens eine Symbol zunächst nur dann angezeigt bleibt, wenn die Zwischenposition (83) nicht um mehr als eine bestimmte Distanz von der Unebenheit (6) beabstandet ist.

2. Haushaltsgerät nach Anspruch 1, wobei die bestimmte Zeit grösser 0.25 Sekunden, insbesondere grösser 0.5 Sekunden, insbesondere grösser 1 Sekunde, insbesondere grösser 2 Sekunden ist, und/oder
maximal 4 Sekunden, insbesondere maximal 3 Sekunden, insbesondere maximal 2 Sekunden, insbesondere maximal 1 Sekunde ist.

3. Haushaltsgerät nach einem der vorangehenden Ansprüche, wobei die Bedienanzeige (1) derart ausgestaltet ist, dass sich bei Verlust des Berührkontaktes während der Berührbewegung das mindestens eine Symbol (55) ausgehend von der Zwischenposition (84) entlang einer prognostizierten Trajektorie weiterbewegt, oder an der Zwischenposition (84) stehen bleibt.

4. Haushaltsgerät nach einem der vorangehenden Ansprüche, wobei das mindestens eine Symbol (55) ein Garprogramm oder eine Garfunktion verkörpert.

5. Haushaltsgerät nach einem der vorangehenden Ansprüche, wobei die Bewegung des mindestens einen Symbols (55) eine Kopierbewegung ist, wobei die Bedienanzeige (1) derart ausgestaltet ist, dass nach der Bewegung des mindestens einen Symbols (55) zur zweiten Anzeigeposition (82) das mindestens eine Symbol (55) sowohl an der ersten Anzeigeposition (81) als auch an der zweiten Anzeigeposition (82) angezeigt wird.

6. Haushaltsgerät nach einem der vorangehenden Ansprüche, wobei eine Zuordnung des mindestens einen Symbols (55) zur ersten Anzeigeposition (81) maschinenseitig bestimmt ist und eine Zuordnung des mindestens einen Symbols (55) zur zweiten Anzeigeposition (82) mittels der Berührbewegung vom Benutzer bestimmbar ist.

7. Haushaltsgerät nach einem der vorangehenden Ansprüche, wobei die Unebenheit (6) eine Vertiefung und/oder eine Erhebung ist.

8. Haushaltsgerät nach einem der vorangehenden Ansprüche, wobei die Unebenheit (6) über einem Bedienelement der Bedienanzeige angeordnet ist.

9. Haushaltsgerät nach einem der vorangehenden Ansprüche, wobei die Unebenheit (6)
- eine Vertiefung mit einer Tiefe (T) von mindestens 0.4 mm, insbesondere von mindestens 0.6 mm ist, und/oder
- eine Breite (B) von mindestens 5 mm und/oder höchstens 20 mm aufweist, und/oder
- eine höhere Oberflächenrauheit als eine die Unebenheit (6) umgebende Oberfläche der Bedienanzeige (1) aufweist, und/oder
- eine Furche bildet, und/oder
- ringförmig oder gerade ist.

10. Haushaltsgerät nach einem der vorangehenden Ansprüche, wobei die bestimmte Distanz 5 cm, insbesondere 3 cm, insbesondere 1 cm, insbesondere 0.5 cm beträgt.

11. Haushaltsgerät nach einem der vorangehenden Ansprüche, wobei die Unebenheit (6) auf einer Geradenverbindung zwischen der ersten Anzeigeposition (81) und der zweiten Anzeigeposition (82) angeordnet ist.

12. Haushaltsgerät nach einem der vorangehenden Ansprüche, wobei die erste Anzeigeposition (81) und die zweite Anzeigeposition (82) auf gegenüberliegenden Seiten der Unebenheit (6) angeordnet sind.

13. Haushaltsgerät nach einem der vorangehenden Ansprüche, wobei das Haushaltsgerät ein Gargerät ist.

14. Verfahren zum Betreiben eines Haushaltsgeräts nach einem der vorhergehenden Ansprüche, mit einer berührungsempfindlichen Bedienanzeige (1), wobei die Bedienanzeige (1) mindestens eine Unebenheit (6) aufweist, aufweisend die folgenden Schritte:
- Detektion einer Berührung auf der Bedienanzeige (1) an einer ersten Anzeigeposition (81), an welcher mindestens ein Symbol (55) angezeigt wird,
- Detektion einer Berührbewegung ausgehend von der ersten Anzeigeposition (81) entlang eines Berührpfades (83) und Mitbewegen des mindestens einen Symbols (55) mit der Berührbewegung entlang des Berührpfades,
- Detektion des Verlustes der Berührung auf der Bedienanzeige (1) während der Berührbewegung an einer Zwischenposition (84),
- fortgesetztes Anzeigen des mindestens einen Symbols (55) auf der Bedienanzeige (1),
- Prüfung, ob die Berührung der Bedienanzeige (1) an demjenigen Ort, an welchem das mindestens eine Symbol angezeigt bleibt, innerhalb einer bestimmten Zeit erneut erfolgt,
- Entscheidfindung, dass
1) wenn die Berührung der Bedienanzeige (1) an demjenigen Ort, an welchem das mindestens eine Symbol (55) angezeigt bleibt, innerhalb der bestimmten Zeit erneut detektiert wird, das mindestens eine Symbol (55) mit der fortgesetzten Berührbewegung entlang des Berührpfades weiter mitbewegt wird, und, dass
2) wenn innerhalb der bestimmten Zeit keine erneute Berührung der Bedienanzeige (1) an demjenigen Ort, an welchem das mindestens eine Symbol (55) angezeigt bleibt, erfolgt, das mindestens eine Symbol (55) erlischt oder auf die erste Anzeigeposition (81) zurückspringt,
wobei das mindestens eine Symbol (55) entlang des Berührpfades über die Unebenheit (6) bewegbar ist,
**dadurch gekennzeichnet, dass** beim Verlust des Berührkontaktes auf einer Zwischenposition (84) auf dem Berührpfad (83) das mindestens eine Symbol zunächst nur dann angezeigt bleibt, wenn die Zwischenposition (83) nicht um mehr als eine bestimmte Distanz von der Unebenheit (6) beabstandet ist.

## Claims

1. Household device with a touch-sensitive control display (1) on which at least one symbol (55) can be displayed, and wherein the control display (1) has at least one unevenness (6),
wherein the control display (1) is adapted in such a way that
- the at least one symbol (55) can be moved by a touch movement from a first display position (81) to a second display position (82), which is spaced apart from the first display position (81), along a touch path (83), and the at least one symbol (55) can be moved along the touch path over the unevenness (6),
- in that if, during the touch movement, a loss of touch contact is detected at an intermediate position (84) on the touch path (83), the at least one symbol remains initially displayed, and
- if, within a certain time after the loss of the touch contact, the touch contact is re-established at the location at which the symbol remains displayed, the at least one symbol (55) can be moved further on the touch path starting from the location at which the symbol remains displayed, or if, within the certain time after the loss of the touch contact, the touch contact is not re-established at the location at which the symbol remains displayed, the symbol (55) goes out or jumps back to the first display position (81),
**characterised in that** the control display (1) is configured in such a way that, in the event of loss of the touch contact at the intermediate position (84) on the touch path (83), the at least one symbol initially remains displayed only if the intermediate position (83) is not spaced from the unevenness (6) by more than a specific distance.

2. Household device according to claim 1, wherein the determined time is greater than 0.25 seconds, in particular greater than 0.5 seconds, in particular greater than 1 second, in particular greater than 2 seconds, and/or
is a maximum of 4 seconds, in particular a maximum of 3 seconds, in particular a maximum of 2 seconds, in particular a maximum of 1 second.

3. Household device according to any one of the preceding claims, wherein the control display (1) is configured in such a way that, in the event of loss of the touch contact during the touch movement, the at least one symbol (55), starting from the intermediate position (84), continues to move along a predicted trajectory or stops at the intermediate position (84).

4. Household device according to any one of the preceding claims, wherein the at least one symbol (55) embodies a cooking programme or a cooking function.

5. Household device according to any one of the preceding claims, wherein the movement of the at least one symbol (55) is a copying movement, wherein the control display (1) is configured in such a way that after the movement of the at least one symbol (55) to the second display position (82), the at least one symbol (55) is displayed both at the first display position (81) and at the second display position (82).

6. Household device according to any one of the preceding claims, wherein an association of the at least one symbol (55) with the first display position (81) is determined on the machine side and an association of the at least one symbol (55) with the second display position (82) can be determined by the user by means of the touch movement.

7. Household device according to any one of the preceding claims, wherein the unevenness (6) is a depression and/or an elevation.

8. Household device according to any one of the preceding claims, wherein the unevenness (6) is arranged above an operating element of the control display (1) .

9. Household device according to any one of the preceding claims, wherein the unevenness (6)
- is a depression with a depth (T) of at least 0.4 mm, in particular of at least 0.6 mm, and/or
- has a width (B) of at least 5 mm and/or at most 20 mm, and/or
- has a higher surface roughness than a surface of the control display (1) surrounding the unevenness (6), and/or
- forms a groove, and/or
- is annular or straight.

10. Household device according to any one of the preceding claims, wherein the determined distance is 5 cm, in particular 3 cm, in particular 1 cm, in particular 0.5 cm.

11. Household device according to any one of the preceding claims, wherein the unevenness (6) is arranged on a straight line connection between the first display position (81) and the second display position (82) .

12. Household device according to any one of the preceding claims, wherein the first display position (81) and the second display position (82) are arranged on opposite sides of the unevenness (6).

13. Household device according to any one of the preceding claims, wherein the household device is a cooking device.

14. Method of operating a household device according to any one of the preceding claims, comprising a touch-sensitive control display (1), wherein the control display (1) comprises at least one unevenness, comprising the following steps:
- detection of a touch on the control display (1) at a first display position (81) at which at least one symbol (55) is displayed,
- detecting a touch movement from the first display position (81) along a touch path (83) and moving the at least one symbol (55) with the touch movement along the touch path,
- detecting the loss of touch on the control display (1) during the touch movement at an intermediate position (84),
- continued display of the at least one symbol (55) on the display (1),
- checking whether the touching of the display (1) at the location at which the at least one symbol remains displayed occurs again within a certain time,
- deciding that
1) if the touching of the control display (1) at the location at which the at least one symbol (55) remains displayed is detected again within the specified time, the at least one symbol (55) is moved further along the touch path with the continued touching movement, and that
2) if no renewed touching of the control display (1) takes place within the specific time at the location at which the at least one symbol (55) remains displayed, the at least one symbol (55) goes out or jumps back to the first display position (81),
wherein the at least one symbol (55) is movable along the touch path over the unevenness (6), and
**characterised in that** upon loss of touch contact at an intermediate position (84) on the touch path (83), the at least one symbol remains initially displayed only if the intermediate position (83) is not spaced from the unevenness (6) by more than a specified distance.

## Revendications

1. Appareil ménager avec un affichage de commande (1) sensible au toucher, sur lequel au moins un symbole (55) peut être affiché, et dans lequel l'affichage de commande (1) présente au moins une aspérité (6),
l'affichage de commande (1) étant conçu de telle sorte que
- le au moins un symbole (55) peut être déplacé par un mouvement de contact d'une première position d'affichage (81) à une deuxième position d'affichage (82), qui est espacée de la première position d'affichage (81), le long d'un chemin de contact (83), et le au moins un symbole (55) peut être déplacé le long du chemin de contact au-dessus de l'aspérité (6),
- en ce que si, pendant le mouvement de contact, une perte du contact tactile est détectée à une position intermédiaire (84) sur le chemin de contact (83), le au moins un symbole reste d'abord affiché, et
- si, dans un temps déterminé après la perte du contact tactile, le contact tactile s'établit à nouveau à l'endroit où le symbole reste affiché, le au moins un symbole (55) peut continuer à se déplacer sur le chemin de contact à partir de l'endroit où le symbole reste affiché, ou si, dans le temps déterminé après la perte du contact tactile, le contact tactile ne s'établit pas à nouveau à l'endroit où le symbole reste affiché, le symbole (55) s'éteint ou revient à la première position d'affichage (81),
**caractérisé en ce que** l'affichage de commande (1) est conçu de telle sorte que, en cas de perte du contact tactile sur la position intermédiaire (84) sur le chemin de contact (83), le au moins un symbole ne reste tout d'abord affiché que si la position intermédiaire (83) n'est pas distante de l'aspérité (6) de plus d'une certaine distance.

2. Appareil ménager selon la revendication 1, dans lequel le temps déterminé est supérieur à 0,25 seconde, notamment supérieur à 0,5 seconde, notamment supérieur à 1 seconde, notamment supérieur à 2 secondes, et/ou
est au maximum de 4 secondes, en particulier au maximum de 3 secondes, en particulier au maximum de 2 secondes, en particulier au maximum de 1 seconde.

3. Appareil ménager selon l'une des revendications précédentes, dans lequel l'affichage de commande (1) est conçu de telle sorte que, en cas de perte du contact tactile pendant le mouvement de contact, l'au moins un symbole (55) continue à se déplacer le long d'une trajectoire pronostiquée à partir de la position intermédiaire (84), ou s'arrête à la position intermédiaire (84).

4. Appareil ménager selon l'une des revendications précédentes, dans lequel le au moins un symbole (55) représente un programme de cuisson ou une fonction de cuisson.

5. Appareil ménager selon l'une des revendications précédentes, dans lequel le mouvement de l'au moins un symbole (55) est un mouvement de copie, l'affichage de commande (1) étant conçu de telle sorte qu'après le mouvement de l'au moins un symbole (55) vers la deuxième position d'affichage (82), l'au moins un symbole (55) est affiché à la fois à la première position d'affichage (81) et à la deuxième position d'affichage (82) .

6. Appareil ménager selon l'une des revendications précédentes, dans lequel une association de l'au moins un symbole (55) à la première position d'affichage (81) est déterminée par la machine et une association de l'au moins un symbole (55) à la deuxième position d'affichage (82) peut être déterminée par l'utilisateur au moyen du mouvement de contact.

7. Appareil ménager selon l'une des revendications précédentes, dans lequel l'aspérité (6) est un creux et/ou une bosse.

8. Appareil ménager selon l'une des revendications précédentes, dans lequel l'aspérité (6) est disposée au-dessus d'un élément de commande de l'affichage de commande.

9. Appareil ménager selon l'une des revendications précédentes, dans lequel l'aspérité (6)
- est un creux d'une profondeur (T) d'au moins 0,4 mm, en particulier d'au moins 0,6 mm, et/ou
- présente une largeur (B) d'au moins 5 mm et/ou d'au plus 20 mm, et/ou
- présente une rugosité de surface plus élevée qu'une surface de l'affichage de commande (1) entourant l'aspérité (6), et/ou
- forme un sillon, et/ou
- est de forme annulaire ou droite.

10. Appareil ménager selon l'une des revendications précédentes, dans lequel la distance déterminée est de 5 cm, en particulier de 3 cm, en particulier de 1 cm, en particulier de 0,5 cm.

11. Appareil ménager selon l'une des revendications précédentes, dans lequel l'aspérité (6) est située sur une ligne droite reliant la première position d'affichage (81) et la deuxième position d'affichage (82).

12. Appareil ménager selon l'une des revendications précédentes, dans lequel la première position d'affichage (81) et la deuxième position d'affichage (82) sont situées sur des côtés opposés de l'aspérité (6).

13. Appareil ménager selon l'une des revendications précédentes, dans lequel l'appareil ménager est un appareil de cuisson.

14. Procédé de fonctionnement d'un appareil ménager selon l'une des revendications précédentes, avec un affichage de commande (1) sensible au toucher, l'affichage de commande (1) ayant au moins une aspérité (6), comprenant les étapes suivantes :
- détecter un toucher sur l'affichage de commande (1) à une première position d'affichage (81) à laquelle au moins un symbole (55) est affiché,
- détecter un mouvement de contact à partir de la première position d'affichage (81) le long d'un chemin de contact (83) et déplacement du au moins un symbole (55) avec le mouvement de contact le long du chemin de contact,
- détecter la perte du contact sur l'affichage de commande (1) pendant le mouvement de contact à une position intermédiaire (84),
- afficher continument l'au moins un symbole (55) sur l'affichage de commande (1),
- vérifier si le contact avec l'affichage de commande (1) à l'endroit où le au moins un symbole reste affiché se produit à nouveau dans un temps déterminé,
- prendre la décision que
1) si le contact avec l'affichage de commande (1) à l'endroit où le au moins un symbole (55) reste affiché est à nouveau détecté dans le temps déterminé, le au moins un symbole (55) continue à être déplacé le long du chemin de contact avec le mouvement de contact continu, et que
2) si, pendant le temps déterminé, il n'y a pas de nouveau contact avec l'affichage de commande (1) à l'endroit où le au moins un symbole (55) reste affiché, le au moins un symbole (55) s'éteint ou revient à la première position d'affichage (81),
le au moins un symbole (55) pouvant être déplacé le long du chemin de contact sur l'aspérité (6),
**caractérisé en ce que**, en cas de perte du contact tactile sur une position intermédiaire (84) sur le chemin de contact (83), le au moins un symbole ne reste tout d'abord affiché que si la position intermédiaire (83) n'est pas distante de l'aspérité (6) de plus d'une distance déterminée.
